# EUROPEAN PATENT SPECIFICATION

(11) **EP 4 404 090 B1**
(45) Date of publication and mention of the grant of the patent: **02.09.2026**
(21) Application number: 24152717.5
(22) Date of filing: 18.01.2024
(51) Int. Cl.: G06F 21/56, H04L 9/40

(54) **A SYSTEM AND A METHOD FOR OPTIMIZING THE ENERGY CONSUMPTION OF CYBER SECURITY PRODUCTS**
SYSTEM UND VERFAHREN ZUR OPTIMIERUNG DES ENERGIEVERBRAUCHS VON CYBERSICHERHEITSPRODUKTEN
SYSTÈME ET PROCÉDÉ D'OPTIMISATION DE LA CONSOMMATION D'ÉNERGIE DE PRODUITS DE CYBERSÉCURITÉ

(30) Priority: 19.01.2023 US 202363480517 P
(43) Date of publication of application: 24.07.2024
(73) Proprietor: Deutsche Telekom AG, 53113 Bonn (DE)
(72) Inventor: Mimran, David, Tel Aviv (IL); Brodt, Oleg, Beer Sheva (IL); Elovici, Yuval, Arugot (IL); Shabtai, Asaf, Hulda (IL); Choi, Jinsung, Bonn (DE); Lehmann, Heiko, Berlin (DE)
(74) Representative: Graf von Stosch Patentanwaltsgesellschaft mbH

(56) References cited:
- EP-B1- 1 655 682
- US-A1- 2010 058 350
- US-A1- 2013 139 165
- US-A1- 2017 262 633
- US-A1- 2020 285 743
- US-A1- 2021 084 061
- ZHONG ZHIHENG ZHIHENG@STUDENT UNIMELB EDU AU ET AL: "Machine Learning-based Orchestration of Containers: A Taxonomy and Future Directions", ARXIV.ORG, CORNELL UNIVERSITY LIBRARY, 201 OLIN LIBRARY CORNELL UNIVERSITY ITHACA, NY 14853, vol. 54, no. 10s, 14 September 2022 (2022-09-14), pages 1 - 35, XP058924405, DOI: 10.1145/3510415

## Description

### Field of the Invention

The present invention relates to the field of cyber security. More particularly, the invention relates to a system and method for optimizing the energy consumption of cyber security products.

### Background for the invention

Cybersecurity products are a popular set of Information Technology (IT - related fields that encompass computer systems, software, programming languages and data and information processing and storage) tools for consumers and businesses use, in order to achieve a high-security level against cyber threats. There are different cyber security tools to protect different assets or protect against different threats. One of the challenges with IT tools is inefficiency in resource consumption, due to the rapid technological change, resulting in an excessive energy footprint.

Information and Communication Technologies (ICT - the infrastructure and components that enable modern computing) consume significant energy, causing high costs, apply pressures on the energy supply, and a being growing contributing factor to climate change. Unfortunately, with the increasing demand for computational power in the unfolding era of information, the energy demand is expected to grow to meet the insatiable energetic requirements of digitalization.

Cloud data centers (buildings, dedicated spaces within a building, or a group of buildings used to house computer systems and associated components, such as telecommunications and storage systems) address high energy costs by relocating infrastructure into areas with cheaper energy sources, as well as offloading the high costs onto customer bills. In addition, since cooling infrastructure is the largest energy consumer of a typical data center, cool-climate countries turned out to be attractive locations for new data centers. As a more profound and more technologically challenging line of defense, vendors of ICT equipment resorted to optimization efforts that focused on developing more energy-efficient hardware. For example, Graphics Processing Unit (GPU) vendors continuously invest in producing more energy-efficient architectures. Recently, there have been efforts to invest in software-level energy efficiency, which entails energy-aware operating systems, virtualization layers, and even individual software components. Such efforts are significant due to their energy-saving potential, since replacing inefficient software components with energy-aware code is easier than replacing hardware.

US 2021/084061 discloses a framework for efficiently and automatically exploring a data network and accurately identifying network threats, which comprises a plurality of software and hardware-based agents, distributed over the data network. The agents are capable of adjusting or reconfiguring, on the fly, the behavior of the agents and their ability to collect data in a targeted manner, so as to investigate suspicious incidents and alerts and collect data that was not yet collected by the system; collecting forensic data by executing tasks defined in workflows, being distributed threat intercepting programs and reporting about the collected forensic data, back to a Central Control Unit (C&C). Distributed threat intercepting programs ("workflows") are used to provide instructions to agents, to perform branching and provide instructions to the C&C, which orchestrates the agents to assure proper execution of the workflows, analyzes the collected information and presents ongoing status to an operator supervising the data network. However, This reference fails to teach generating a behavioral profile of the user or machine and adapting the operation of each security product, accordingly; and orchestrating the local security products by using Al to minimize their energy consumption.

EP 1 655 682 discloses a system for aggregating the knowledge base of a plurality of antivirus software applications to prevent the execution or spread of malware, which comprises a program module capable of satisfying an input or output request; a kernel mode security service application operative to prevent the request from being satisfied when the antivirus software applications detect malware; and a user mode security service application operative to schedule scans between the antivirus software applications. The kernel mode security service application further comprises a scan cache adapted to prevent unnecessary scans to be performed by the plurality of antivirus software applications by tracking the state of a file as being known malware, known safe or unknown in a variable associated with a unique file index value of the file.

ZHONG et al ("Machine Learning-based Orchestration of Containers", XP058924405) discloses how container orchestration is managed using diverse machine learning-based approaches, with emphasis on the specific application architectures and cloud infrastructures. ML-based models could produce more accurate orchestration decisions with shorter computation delays, under complex and dynamic cloud environments consisting of highly heterogeneous and geographically distributed computation resources. Machine learning-based methods have been applied under a wider angle of scenarios, but there is no systematic approach to build a complete machine learning-based optimization framework in charge of the whole orchestration process. Under the emerging trend of moving micro service and serverless applications to hybrid clouds, such frameworks are necessary to handle the sustainably growing system complexity and balance multi-dimensional optimization objectives. This helps finding the important characteristics of ML-based orchestration approaches and selecting the most suitable techniques for efficient container orchestration with the specific requirement under different application architectures. For instance, researchers can utilize the GRU-based approach to conduct time series analysis of workloads, and exploit the RL-based approach to make resource provisioning decisions.

US 2010058350 discloses framework for distribution of computer workloads based on real-time energy costs for conducting compute tasks at diverse data center sites, which are are determined and are then used to route such tasks in a most efficient manner. A given compute task is first evaluated to predict potential energy consumption. The most favorable real-time energy costs for the task are determined at the various data center sites. The likely time period of the more favorable cost as well as the stability at the data center are additional factors. A workload dispatcher then forwards the selected compute task to the data center having the most favorable real-time energy costs. Among the criteria used to select the most favorable data center is a determination that the proposed center presently has the resources for the task. A stabilizer is utilized to balance the workload among the data centers. A computer implementation for performing the various steps of the cost determination and allocation is also described.

US2013139165 discloses a system and method for distributing processing of computer security tasks. A distributed computing service obtains task requests to be performed for the benefit of beneficiary computers, and delegates those tasks to one or more remote agent computers for processing. The delegation is based on a suitability determination as to whether each of the remote agent computers is suitable to perform the processing. Suitability can be based on an evaluation of such parameters as computing capacity and current availability of the remote agent computers against the various tasks to be performed and their corresponding computing resource requirements. This evaluation can be performed according to various embodiments by the agent computers, the distributed computing service, or by a combination thereof.

US2020285743 discloses system and method for performing an antivirus scan using file level deduplication. Prior to performing an antivirus scan on files stored on at least two storage devices, a deduplication module calculates a respective hash for each respective file stored on the storage devices. The deduplication module identifies a first file stored the storage devices and determines whether at least one other copy of the first file exists on the storage devices. In response to determining that another copy exists, the deduplication module stores the first file in a shared database, replaces all copies of the first file on the storage devices with a link to the first file in the shared database, and performs the antivirus scan on (1) the first file in the shared database and (2) the files stored on the storage devices.

However, these prior art references fail to generate a behavioral profile of the user or machine is, which are related to the operation that the user is performing or not performing. They also fail to teach or suggest optimizing the energetic footprint of cyber security products without compromising security and performing energy optimization of existing security products using only different orchestration strategies.

It is, therefore, an object of the present invention to provide a method for making the cybersecurity product category much more energy efficient. This object is solved by the subject-matter of the independent claims. Preferred embodiments are defined in the dependent claims.

It is another object of the present invention to provide a systematic method for optimizing the energetic footprint of cyber security products without compromising security.

It is a further object of the present invention to provide a systematic method for optimizing the energetic footprint of cyber security products without balancing the required security level with the lowest possible energy consumption level.

Other objects and advantages of the invention will become apparent as the description proceeds.

### Summary of the Invention

A method for optimizing the energy consumption of cyber security products, comprising:
a) installing Local Optimizer being a software agent on every computing device where there is a cyber security function that should be optimized;
b) installing a Central Optimizer being a single centralized software agent on a computing device being accessible to all Local Optimizer software agents; and
c) operating the Central Optimizer as a coordinating decision making unit, for impacting optimization decisions taken by all Local Optimizers.

The Local Optimizer optimizes the operation of local security products by:
a) adapting/re-configuring the operation of the local security products;
b) generating a behavioral profile of the user or machine and adapting the operation of each security product, accordingly; and
c) using Artificial Intelligence (AI) to orchestrate the local security products to minimize their energy consumption;
d) collecting data regarding monitored objects and the state of the Local Optimizers; and
e) optimizing, by the Central Optimizer, using rule-based logic or AI, the inspection of the objects across all computers having Local Optimizers.

The monitored objects may be selected from the group of:
- files;
- data streams;
- URLs.

A Parallel Scan may be performed by:
a) relocating cyber security tasks to locations/times where energy cost is lower; and
b) conducting parallelization of malware scanning with user activity.

Cyber security tasks may be relocated to locations/times where energy cost is lower by:
c) inputting to the Central Optimizer, a table with information on different locations, where computing resources are available and their respective variable energy costs over time;
d) continuously evaluating, by the Central Optimizer, the content of the table and information on future cyber security workloads to be executed via the network of local optimizers; and
e) continuously instructing, by the Central Optimizer, the Local Optimizers to shift cyber security workloads to operate in preferable energy location and/or at different times

The workload shift may be performed via communications between the Central Optimizer and the Local Optimizers of the source and destination computing devices, where the workload is being relocated.

Excessive energy consumption during the periodic scan of the AV conducts may be prevented by:
a) continuously monitoring, by the Local Optimizer, the CPU% usage of the computing device the Local Optimizer runs in; and
b) dynamically postponing the periodic scan to times where the CPU% usage over the time the AV is expected to run, based on historical data that represents medium level activity.

File Input/Output (I/O) operations may be reduced by:
a) persisting the files on volatile storage such that the files are read once from a non-volatile memory into a volatile memory; and
b) performing every following files scan on the volatile storage.

The method may further comprise the steps of:
a) allowing the Central Optimizer to hold an updated list of scanned files where the list is maintained as a table, including all the files scanned at least once in a network of computers.
b) reporting, by the Local Optimizer of the device, each file that has been scanned in a computing device for the first time is, along with metadata;
c) replicating the table across all the computing devices running the Local Optimizer; and
d) deciding which files the AV should ignore in its future scanning operations.

The method may further comprise the steps of:
a) recording other metadata attributes of the file within the database;
b) using the values for comparison before the next scan of a file; and
c) skipping the file whenever the metadata attributes have not changed.

The file may be compressed, by the Local Optimizer, with password protection by utilizing the database for recording the password.

Whenever an AV has an update to its signatures database to identify previously unknown malware, optimization may be performed by:
a) splitting the AV signatures database, based on file type and re-scan only the files within a file type category that had changes in its signatures database;
b) adding an initiation date to each signature that states when the malicious code was created;
c) scanning only files created or modified after the initiation date; and
d) scanning all the required files only with a subset of the signatures database that contains the increment of the signatures that have been added or modified since the recent scan.

The energy efficiency of an AV that handles web browser-based files may be optimized by:
a) scanning the web asset files in a centralized proxy server or a web gateway once, orchestrated by the Local Optimizer inside the Proxy Server;
b) instructing every other computing device which browses the web via the Proxy Server to eliminate redundant scans to the web assets files that were previously scanned;
c) orchestrating, by the Central Optimizer, the settings across the proxy clients and the proxy itself; and
d) activating the browser in a remote server with lower energy cost and allowing the user to use the browser in a terminal mode in which keystroke and mouse movements are sent to the server and graphical and audio output are sent back to the user.

A system for optimizing the energy consumption of cyber security products, comprising:
a) a plurality of computerized devices, each running a cyber security function to be optimized and having a Local Optimizer being a software agent on every computing device where there is a cyber security function that should be optimized; and
b) a Central Optimizer being a single centralized software agent installed on a computing device being accessible to all Local Optimizer software agents, the Central Optimizer being a coordinating decision making unit, for impacting optimization decisions taken by all Local Optimizers.

### Brief Description of the Drawings

The above and other characteristics and advantages of the invention will be better understood through the following illustrative and non-limitative detailed description of preferred embodiments thereof, with reference to the appended drawings, wherein:

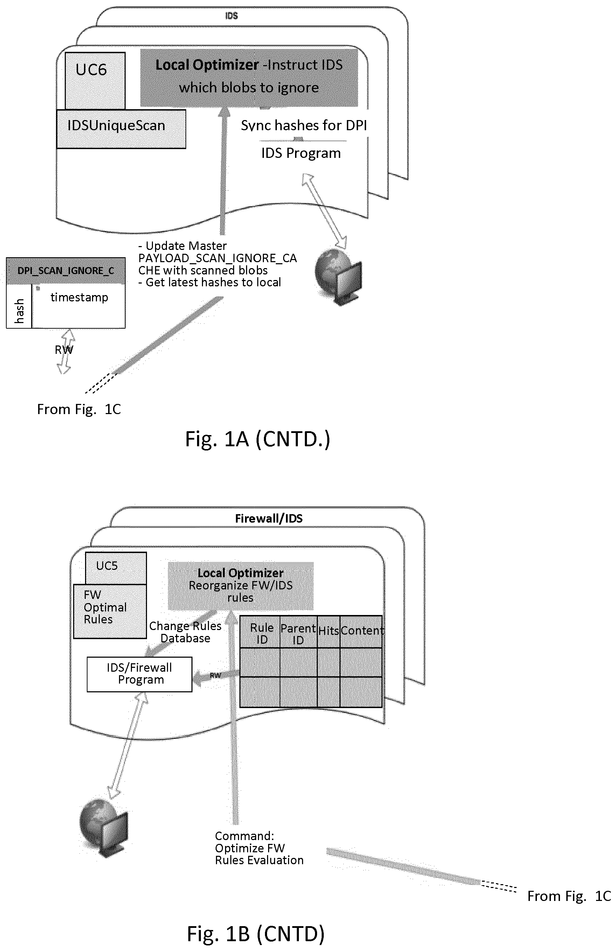

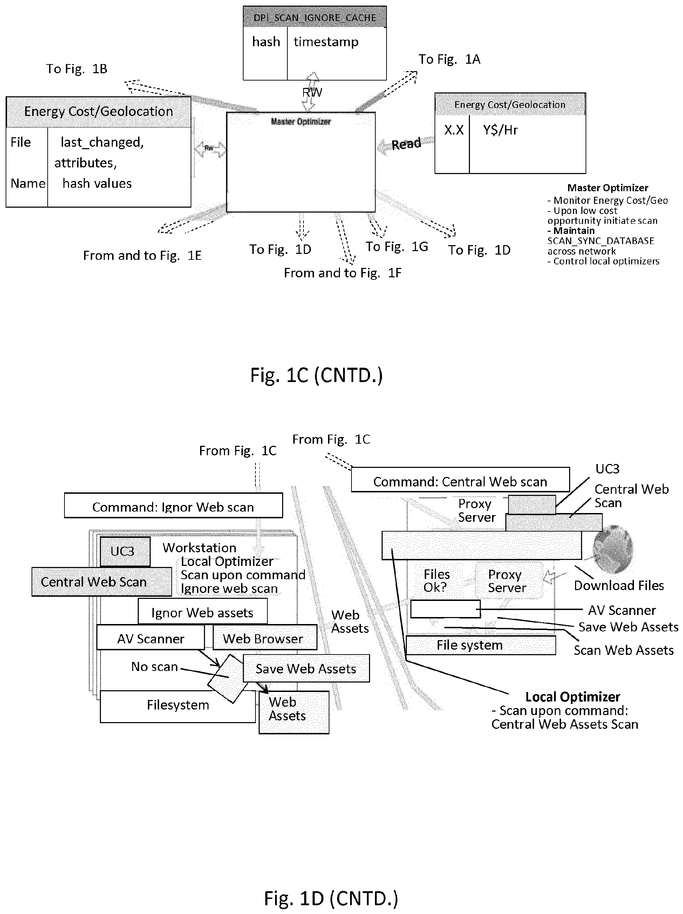

- Figs. 1A-1G show a flowchart of high-level architecture and examples of various actions performed.

### Detailed Description of the Invention

The present invention provides a system and method for optimizing the energy consumption of cyber security products. The proposed method optimizes the energetic footprint of cyber security products without compromising security and/or is adapted to balance the required security level with the lowest possible energy consumption level. The method of the present invention encompasses energy optimization of existing security products using only different orchestration strategies, as well as new approaches to change the way existing cyber security products work to achieve energy efficiency.

The proposed system consists of a central unit, which is responsible for taking energy optimization decisions in a computer network(s), where there is a local unit responsible for local energy optimization decisions on each computer. The local and central units are responsible for how different cyber security products operate across the network, so as to achieve high energy efficiency without compromising security or usability. The invention exemplifies energy efficiency across anti-malware protection and network defense cyber security tools. The invention also supports other examples of use related to cyber security products.

Figs. 1A-1G illustrate a system for optimizing the energy footprint of cyber security products in a network/enterprise setup without compromising security. The system comprises a software agent (a "Local Optimizer"), located in every computing device where there is a cyber security function that should be optimized, and a single centralized software agent (a "Central/Master Optimizer") located in a computing device that is accessible to the Local Optimizer software agents and acts as a coordinating decision making unit that can impact the decisions of the Local Optimizers.

The Local Optimizer can optimize the operation of local (on-host) security products by the following steps:
1. Adapting/re-configuring the operation of the security products (e.g., scheduling the scanning of Anti-Virus (AV) to different time windows, reordering the Fire-Wall rules, which are the major components of firewall policies that determine which types of traffic your firewall allows in and out of your network, and which are blocked).
2. Generating a behavioral profile of the user or machine and adapting the operation of the security product accordingly (e.g., if the user does not open *.pdf files coming from a certain email account, they will not be scanned by the AV).
3. Utilizing Artificial Intelligence (AI) methods to orchestrate local security products in a way that will minimize energy consumption with minimal impact on security (e.g., if a specific file was checked by the local AV, it will not be dynamically monitored by the local Endpoint Detection and Response (EDR - an integrated endpoint security solution that combines real-time continuous monitoring and collection of endpoint data with rules-based automated response and analysis capabilities).

The Central Optimizer maintains a global view of monitored objects (i.e., files, data streams, URLs, etc.) and the state of the Local Optimizers. By using rule-based logic or Al-based approach, the Central Optimizer optimizes the inspection of the objects across all machines (i.e., Local Optimizers). For example, if a file was inspected by an AV on a machine, the Local Optimizer on that machine will update the Global Optimizer, and other machines with the same file will not activate the AV for inspecting that file.

Figs. 1A-1G show a flowchart of high-level architecture and examples of use in the present invention to perform various actions.

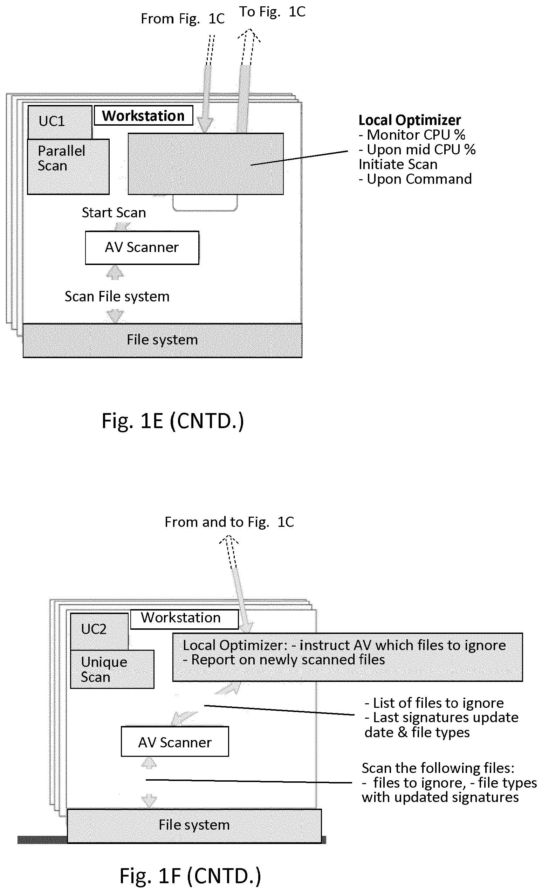

According to one embodiment, a Parallel Scan (shown in UC1 block of Fig. 1E) supports two energy efficiency optimizations: (1) relocating cyber security tasks to locations (determined by geo files used to associate Internet resources with geographical locations)/times where energy cost is lower and (2) conducting parallelization of malware scanning with user activity.

In the example of UC1, the Local Optimizer of the workstation receives a command from the Central Optimizer to initiate scanning of Geo Files. The Local Optimizer monitors the CPU% and when the CPU% is about a medium level, starts scanning the file system by the AV scanner and reports the Geolocation back to the Central Optimizer.

In the example of UC2, the Local Optimizer of the workstation receives a command from the Central Optimizer which files to ignore and reports about new scanned files. The Local Optimizer initiates scanning the file system by the AV scanner which scans files which were not ignored, as well as file types with updated signatures, udates the SCAN_SYNC_DATABASE and reports the latest list of scanned files .

### Relocating Cyber Security Tasks

According to this optimization, the input to the Central Optimizer is a table with information on different locations, where computing resources are available and their respective variable energy costs over time. The Central Optimizer continuously evaluates the content of the table and information on future cyber security workloads to be executed via the network of local optimizers. The Central Optimizer continuously instructs the Local Optimizers to shift cyber security workloads (such as malware scanning) to operate in an advantageous energy location and/or at different times. The workload shift is performed via communications between the Central Optimizer and the Local Optimizers of the source and destination computing devices where the workload is being relocated, and all workload-required information is transferred.

### Malware Scanning During Background Activity

Anti-malware tools, including antiviruses (AV) and Next-Generation AVs (NGAVs - prevent all types of attacks, known and unknown, by monitoring, responding to attacker tactics, techniques and procedures) scan the contents residing on a computer (e.g., files, cache memory, etc.) periodically, and/or when content is created/changed/accessed, to verify whether it contains malicious code that can harm the computer and prevent its execution before the damage is done. Periodic scan of AVs that are executed when the computer is not active (such as during weekends or nights) causes excessive energy consumption because whenever a program starts running in a computer that is in an idle mode, it requires starting up a multitude of services and hardware components (such as the motherboard or the cooling fan) in the computer to become active. Whenever more than one active program is running at a certain point in time, these resources are efficiently shared across all the running programs. To prevent excessive energy consumption during the periodic scan that the AV conducts, the Local Optimizer continuously monitors the CPU % usage of the computing device it runs in. Based on user-defined schedule of the AV, it dynamically postpones the periodic scan to times where the CPU% usage over the time the AV is expected to run, based on historical data that represents medium level activity. Therefore, the scan of the AV will enjoy resource sharing and low energy consumption and will not impose unnecessary overhead on the usability of the computer.

A further enhancement for the periodic scan of files by the AV is the reduction of file Input/Output (I/O) operations (such as open, close, read, write and append, all of which deal with standard disk or tape files). The major contributors to the energetic cost of AVs are the file operations occurring during a scan, where each file is required to be opened, read, and closed by the AV. The energetic cost is associated with the high energy requirements to operate different non-volatile storage devices, and optimization in such cases is to persist the files on volatile storage such as RAM where the files (all the files or specific type of files that are accessed frequently or are considered as more offensive potentially) will be read once from the non-volatile memory into the volatile memory. Then, every following files scan will be done on the RAM and will result in lower energetic cost as RAM access has lower energetic cost vs. long term storage.

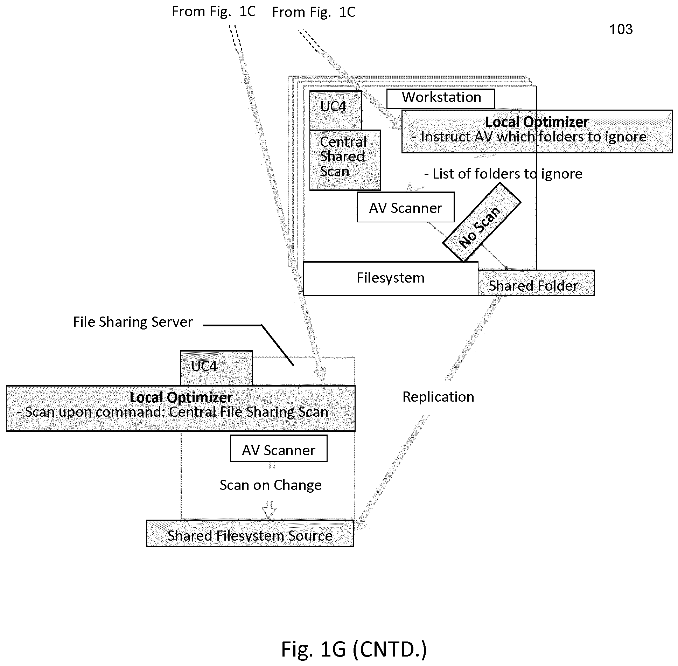

Unique Scan (UC2 in Fig. 1F) and Central Shared Scan (UC4 in Fig. 1G) are examples that enable saving resources in how AVs operate, where scanning a new file for malware is critical to verify its integrity and as long as the file's content does not change, any following scan is redundant and results in wasted energy. To achieve this optimization, the Central Optimizer holds an updated list of scanned files where in a certain potential implementation, the list can be maintained as a table (named "SCAN_SYNC_DATABASE") including all the files scanned at least once in a network of computers. Each file that has been scanned in a computing device for the first time is reported by the Local Optimizer of that device, along with metadata (such as the last changed date of the file, hash calculation of its content, and other attributes that can help identify the same file in the future). The SCAN_SYNC_DATABASE table is replicated across all the computing devices running the Local Optimizer and is used to decide which files the AV should ignore in its future scanning operations as long as its contents do not change.

Other attributes of the file (such as its file size and creation date of the file) may be recorded within the database of SCAN_SYNC_DATABASE, and these values are used for comparison before the next scan of a file takes place. In case these metadata attributes have not changed, the file is skipped.

Parts of the file in X random locations are read, while reading Y bytes per each location. Then a hash value on the joined read areas of the file are created, and the hash value and the X and Y combinations in the SCAN_SYNC_DATABASE are recorded, following a scan of the file. Before the following scan, the X and Y parameters of the hash value are read from SCAN_SYNC_DATABASE. Then, the same areas of the file are read, and the same hash function is run on the combined read areas, to verify whether the file has changed, so as to prevent the next scan from running. The proposed method will save creating a hash for huge files, which will result in reading the complete file. The proposed method will also prevent scanning the same file in terms of content but with different names in the file system and will save wasted energy on scanning exact copies of the same file.

To prevent rescanning of files that were scanned before and not accessible by users frequently, the Local Optimizer can compress the file with password protection by utilizing the SCAN_SYNC_DATABASE for recording the password. The password protection will prevent the AV from rescanning the file, and if and when the user re-accesses the file, the password can be retrieved from the SCAN_SYNC_DATABASE and automatically be uncompressed.

In an organization where the same file can appear on different computers or passes through a choke point such as an email gateway, the SCAN_SYNC_DATABASE can eliminate redundant scans of the same file in different computers, as the data of which files have been scanned is shared via the Central Optimizer.

In case of a file sharing service, both internal file sharing (as depicted in Figs. 1A-1G Example of use 4) such as a SharePoint server or usage of a third-party service such as Dropbox or Google Drive, the new files in the original folder will be scanned by the AV orchestrated by the respective Local Optimizer, while saving any other computing device from repeated scans of the same files on each other computing device.

In case when an AV has an update to its signatures database (which reflects the need to rescan previously scanned files even though they have not changed) to identify previously unknown malware, the following methods can be used for optimization:
∘ The AV signatures database are split, based on file type and re-scan only the files within a file type category that had changes in its signatures database.
∘ An initiation date is added for each signature that states when the malicious code was created, and only files created or modified after that date will be scanned.
∘ All the required files will be scanned only with a subset of the signatures database that contains the increment of the signatures that have been added or modified since the recent scan to achieve faster scan times.

An example of Central Web Scan (shown in block UC3 of Fig. 1D) allows AVs to save resources during web browsing sessions (by ignoring Web Scan) Web browsers download the files of each website a user is visiting, including HTML, JS, and Cascading Style Sheets (CSSs - files that describe how HTML elements are displayed on the screen, paper, etc.) to be able to render the website properly inside the browser and to enable proper interaction with the elements in the web page (the "Web Assets"). The Web Assets are treated as regular new files which are copied to a computer from the point of view of the AV and are scanned on every visit to a website unless the web browser caching mechanism is used and the files are not updated in the file system.

To optimize the energy efficiency of an AV that handles web browser-based files, the following steps are performed:
- Scanning the web asset files in a centralized proxy server or a web gateway once, orchestrated by the Local Optimizer inside the Proxy Server. Every other computing device which browses the web via the mentioned Proxy Server will be instructed by its respective Local Optimizer to eliminate redundant scans to the web assets files that were previously scanned. The Central Optimizer will orchestrate the settings across the proxy clients and the proxy itself.
- A preemptive scanning of the Web Assets of the most popular websites visited by a specific company that can be scheduled in an energy-efficient schedule can prevent rescanning of the web browser files of highly popular websites on each local computer utilizing the SCAN_SYNC_DATABASE mechanism.
- Activating the browser in a remote server with lower energy cost and allowing the user to use the browser in a terminal mode where keystroke and mouse movements are sent to the server and graphical and audio output are sent back to the user resulting in minimal processing and energetic cost on the local computer.

The method proposed by the present invention may be used for FW Optimal Rules and IDS Unique Scan (shown in block UC6 of Fig. 1A). Many cyber security products are utilized to scan network traffic across an enterprise network and inside computers in the forms of firewalls which decide the type of traffic that is allowed/disallowed from a certain computer to others, as well as an Intrusion Detection System (IDS)/Intrusion Prevention System (IPS) products that inspect the traffic components looking for malicious code or artifacts that can imply on malicious activity.

The following is a set of optimizations that can result in a lower energy footprint without sacrificing the level of security required (as shown in block UC5 of Fig. 1B):
- The FW/IDS rules are reordered to evaluate against traffic in descending order of the most popular ones. The popularity will be re-orded as Hits in a column in a table inside the computing device, where the Local Optimizer will update the Hits counter routinely and will re-order the evaluation rules based on popularity. This optimization will eliminate unnecessary verifications of traffic against less popular rules in an arbitrary manner.
- The data structure holding the rules of FW and IDS (which inspect traffic from a list of rules to a tree of rules) will be changed, where the organization of the tree will allow traversal to the most relevant rules in the shortest path and by that will enable minimum scanning of the traffic to be scanned only by the most relevant rules. The Local Optimizer will record the parent-child relationship in a table using Rule ID and Parent ID columns. This table will be used by the IDS/FW in the rules evaluation algorithm.
- Tagging complex traffic payloads that have gone through deep packet inspection or deep content analysis so that other IDS in the organization will be aware that the payload has been scanned and will be skipped resulting in less energy consumption. The tagging of the payload will be recorded in a shared table (called DPI_SCAN_IGNORE_CACHE) where for each Binary Large Object (BLOB - a generic term used to describe the handling and storage of long strings of data by database management systems. A BLOB is characterized by large size, which can place extreme demands on storage systems and network bandwidth), a hash will be calculated, and the current time timestamp will be recorded. Before scanning the following blob in any IDS in the network and upon the condition that such hash exists and its timestamp is not older than X seconds (as part of a caching mechanism) then the blob will be ignored from a DPI scan.
- Reduction of the ruleset in firewalls only to the relevant rules per each FW relevant to its connected topology so only the relevant rules in each FW will be evaluated. This optimization is effective when a global list of rules is distributed and replicated across multiple FWs in a single network.

The above examples and description have of course been provided only for the purpose of illustration, and are not intended to limit the invention in any way. As will be appreciated by the skilled person, the invention can be carried out in a great variety of ways, employing more than one technique from those described above, all without exceeding the scope of the invention.

## Claims

1. A method for optimizing the energy consumption of cyber security products in a network, comprising:
a) installing Local Optimizer being a software agent on every computing device ;
b) installing a Central Optimizer being a single centralized software agent on a computing device being accessible to all Local Optimizer software agents; and
c) operating said Central Optimizer as a coordinating decision making unit, for impacting optimization decisions taken by all Local Optimizers,
***characterized in that:*** said Central Optimizer optimizes the operation of local security products by:
d) adapting or re-configuring the operation of the local security products;
e) generating a behavioral profile of the user or machine and adapting the operation of each local security product, accordingly;
f) using Artificial Intelligence, AI, to orchestrate said local security products to minimize their energy consumption;
g) collecting data regarding monitored objects and the state of the Local Optimizers; and
h) optimizing, by said Central Optimizer, using rule-based logic or AI, the inspection of the objects across all computers having Local Optimizers.

2. A method according to claim 1, wherein the monitored objects are selected from the group of:
- files;
- data streams;
- Uniform Resource Locators, URLs.

3. A method according to claim 1, further comprising performing a Parallel Scan by:
a) relocating cyber security tasks to locations/times where energy cost is lower; and
b) conducting parallelization of malware scanning with user activity.

4. A method according to claim 1, wherein cyber security workloads, consisting of cyber security tasks, are relocated to locations/times where energy cost is lower by:
a) inputting to the Central Optimizer, a table with information on different locations, where computing resources are available and their respective variable energy costs over time;
b) continuously evaluating, by said Central Optimizer, the content of said table and information on future cyber security workloads to be executed via the network of local optimizers; and
c) continuously instructing, by said Central Optimizer and based on said information on future cyber security workloads, the Local Optimizers to shift distributed cyber security workloads to operate in preferable energy location and/or at different times.

5. A method according to claim 4, wherein a cyber security workload shift is performed via communications between the Central Optimizer and the Local Optimizers of the source and destination computing devices, where the workload is being relocated.

6. A method according to claim 4, wherein excessive energy consumption which the Anti-Virus, AV, conducts during periodic scan is prevented by:
a) continuously monitoring, by the Local Optimizer, the CPU% usage of the computing device said Local Optimizer runs in; and
b) dynamically postponing, by the Local Optimizer, said periodic scan to times where the CPU% usage over the time the AV is expected to run is about a medium level, based on historical data.

7. A method according to claim 4, further comprising reducing file Input/Output operations by:
a) persisting the files on volatile storage such that the files are read once from a non-volatile memory into a volatile memory; and
b) performing every following files scan on said volatile storage.

8. A method according to claim 4, further comprising:
a) allowing the Central Optimizer to hold an updated list of scanned files where the list is maintained as a table, including all the files scanned at least once in a network of computers.
b) reporting, by the Local Optimizer of said device, each file that has been scanned in a computing device for the first time is, along with metadata;
c) replicating said table across all the computing devices running the Local Optimizer; and
d) deciding which files the Anti-Virus, AV, should ignore in its future scanning operations.

9. A method according to claim 4, further comprising:
a) recording other metadata attributes of the file within the database;
b) using values of metadata attributes for comparison before the next scan of a file; and
c) during file scan, skipping the file whenever said metadata attributes have not changed.

10. A method according to claim 4, further comprising compressing the file by the Local Optimizer with password protection by utilizing a database for recording the password.

11. A method according to claim 4, wherein whenever an Anti-Virus, AV, has an update to its signatures database to identify previously unknown malware, performing optimization by:
a) splitting the AV signatures database, based on file type and re-scan only the files within a file type category that had changes in its signatures database;
b) adding an initiation date to each signature that states when the malicious code was created;
c) scanning only files created or modified after said initiation date; and
d) scanning all the required files only with a subset of the signatures database that contains the increment of the signatures that have been added or modified since the recent scan.

12. A method according to claim 4, wherein the energy efficiency of an Anti-Virus, AV, that handles web browser-based files is optimized by:
a) scanning the web asset files in a centralized proxy server or a web gateway once, orchestrated by the Local Optimizer inside the Proxy Server;
b) instructing every other computing device which browses the web via the Proxy Server to eliminate redundant scans to the web assets files that were previously scanned;
c) orchestrating, by the Central Optimizer, the settings across the proxy clients and the proxy itself; and
d) activating the browser in a remote server with lower energy cost and allowing the user to use the browser in a terminal mode in which keystroke and mouse movements are sent to the server and graphical and audio output are sent back to the user.

13. A system for optimizing the energy consumption of cyber security products in a network, comprising:
a) a plurality of computerized devices having a Local Optimizer being a software agent on every computing device ; and
b) a Central Optimizer being a single centralized software agent installed on a computing device being accessible to all Local Optimizer software agents, said Central Optimizer being a coordinating decision making unit, for impacting optimization decisions taken by all Local Optimizers,
***characterized in that**:*
said Central Optimizer optimizes the operation of local security products by:
a) adapting or re-configuring the operation of the local security products;
b) generating a behavioral profile of the user or machine and adapting the operation of each local security product, accordingly;
c) using Artificial Intelligence, AI, to orchestrate said local security products to minimize their energy consumption;
d) collecting data regarding monitored objects and the state of the Local Optimizers; and
e) optimizing, by said Central Optimizer, using rule-based logic or AI, the inspection of the objects across all computers having Local Optimizers.

## Patentansprüche

1. Ein Verfahren zur Optimierung des Energieverbrauchs von Cybersicherheitsprodukten in einem Netzwerk, umfassend:
a) Installieren eines lokalen Optimierers ("Local Optimizer"), der ein Software-Agent ist, auf jedem Computergerät;
b) Installieren eines zentralen Optimierers ("Central Optimizer"), der ein einziger zentralisierter Software-Agent ist, auf einem Computergerät, auf das alle "Local Optimizer"-Software-Agenten zugreifen können; und
c) Betreiben des "Central Optimizer" als koordinierende Entscheidungsfindungseinheit, um die von allen "Local Optimizern" getroffenen Optimierungsentscheidungen zu beeinflussen,
***dadurch gekennzeichnet, dass***
der "Central Optimizer" den Betrieb lokaler Sicherheitsprodukte optimiert, durch
d) Anpassen oder Neukonfigurieren des Betriebs der lokalen Sicherheitsprodukte;
e) Erzeugen eines Verhaltensprofils des Nutzers oder der Maschine und entsprechendes Anpassen des Betriebs jedes lokalen Sicherheitsprodukts;
f) Einsetzen künstlicher Intelligenz (KI), um die lokalen Sicherheitsprodukte so zu koordinieren, dass deren Energieverbrauch minimiert wird;
g) Sammeln von Daten über überwachte Objekte und den Status der "Local Optimizer"; und
h) Optimieren der Überprüfung der Objekte auf allen Computern mit "Local Optimizern" durch den "Central Optimizer" unter Verwendung regelbasierter Logik oder Kl.

2. Ein Verfahren nach Anspruch 1, wobei die überwachten Objekte aus der Gruppe ausgewählt werden, von:
- Dateien;
- Datenströmen;
- Uniform Resource Locators (URLs).

3. Ein Verfahren nach Anspruch 1, das ferner das Durchführen eines parallelen Scans ("Parallel Scan") umfasst, durch
a) Verlagern von Cybersicherheitsaufgaben an Orte/zu Zeiten, an/zu denen die Energiekosten niedriger sind; und
b) Parallelisieren des Malware-Scannings mit der Nutzeraktivität.

4. Ein Verfahren nach Anspruch 1, wobei Cybersicherheits-Workloads, bestehend aus Cybersicherheitsaufgaben, an Orte/zu Zeiten verlagert werden, an/zu denen die Energiekosten niedriger sind, durch
a) Eingeben einer Tabelle mit Informationen zu verschiedenen Standorten, an denen Rechenressourcen verfügbar sind, und ihren jeweiligen variablen Energiekosten im Zeitverlauf in den "Central Optimizern";
b) kontinuierliches Auswerten des Inhalts der Tabelle und der Informationen über zukünftige Cybersicherheits-Workloads, die über das Netzwerk von "Local Optimizern" ausgeführt werden sollen, durch den "Central Optimizer"; und
c) kontinuierliches Anweisen der "Local Optimizer" durch den "Central Optimizer" auf der Grundlage der Informationen über zukünftige Cybersicherheits-Workloads, die verteilten Cybersicherheits-Workloads zu verlagern, um an einem bevorzugten Energieort und/oder zu unterschiedlichen Zeiten zu arbeiten.

5. Ein Verfahren nach Anspruch 4, wobei eine Verlagerung der Cybersicherheits-Workloads über die Kommunikationen zwischen dem "Central Optimizer" und den "Local Optimizern" der Quell- und Ziel-Computer-Geräte erfolgt, wohin der Workload verlagert werden soll.

6. Ein Verfahren nach Anspruch 4, wobei ein übermäßiger Energieverbrauch, den das Anti-Virus (AV) während eines periodischen Scans verursacht, verhindert wird durch:
a) kontinuierliches Überwachen der CPU%-Auslastung des Computergeräts, auf dem der "Local Optimizer" läuft, durch den "Local Optimizer"; und
b) dynamisches Verlegen des periodischen Scans auf Zeiten, zu denen die CPU%-Auslastung während der erwarteten Laufzeit des AV auf ungefähr mittlerem Niveau liegt, auf der Grundlage historischer Daten.

7. Ein Verfahren nach Anspruch 4, das ferner umfasst: Reduzieren der Datei-Eingabe-/Ausgabe-Operationen durch:
a) derartiges Speichern von Dateien auf einem flüchtigen Speicher, dass die Dateien einmal aus einem nichtflüchtigen Speicher in einen flüchtigen Speicher gelesen werden; und
b) Durchführen jedes folgenden Dateiscans auf dem flüchtigen Speicher.

8. Ein Verfahren nach Anspruch 4, das ferner umfasst:
a) dem "Central Optimizer" das Führen einer aktualisierten Liste gescannter Dateien zu ermöglichen, wobei die Liste als Tabelle geführt wird, die alle Dateien enthält, die mindestens einmal in einem Netzwerk von Computern gescannt wurden;
b) Melden jeder Datei, die zum ersten Mal in einem Computergerät gescannt wurde, zusammen mit Metadaten durch den "Local Optimizer" des Geräts;
c) Replizieren der Tabelle auf allen Computergeräten, auf denen der "Local Optimizer" läuft; und
d) Entscheiden, welche Dateien der Anti-Virus (AV) bei seinen zukünftigen Scanvorgängen ignorieren sollte.

9. Ein Verfahren nach Anspruch 4, das ferner umfasst:
a) Aufzeichnen anderer Metadaten-Attribute der Datei in der Datenbank;
b) Verwenden der Werte der Metadaten-Attribute zum Vergleich vor dem nächsten Scannen einer Datei; und
c) während des Dateiscans das Überspringen der Datei, wenn sich die Metadaten-Attribute nicht geändert haben.

10. Ein Verfahren nach Anspruch 4, das ferner umfasst: Komprimieren der Datei durch den "Local Optimizer" mit Passwortschutz unter Verwendung einer Datenbank zum Aufzeichnen des Passworts.

11. Ein Verfahren nach Anspruch 4, wobei immer dann, wenn ein Anti-Virus (AV) eine Aktualisierung seiner Signaturdatenbank zur Identifizierung zuvor unbekannter Malware hat, eine Optimierung durchgeführt wird durch:
a) Aufteilen der AV-Signaturdatenbank auf der Grundlage des Dateityps und erneutes Scannen von den Dateien innerhalb einer Dateitypkategorie, bei denen sich Änderungen in deren Signaturdatenbank ergeben haben;
b) Hinzufügen eines Startdatums zu jeder Signatur, das angibt, wann der bösartige Code erstellt wurde;
c) nur Scannen von Dateien, die nach dem genannten Startdatum erstellt oder geändert wurden; und
d) Scannen aller erforderlichen Dateien nur mit einer Teilmenge der Signaturdatenbank, die das Inkrement von seit dem letzten Scan hinzugefügten oder geänderten Signaturen enthält.

12. Ein Verfahren nach Anspruch 4, wobei die Energieeffizienz eines Anti-Virus, AV, das Webbrowser-basierte Dateien verarbeitet, optimiert wird, durch:
a) einmaliges Scannen der Web-Asset-Dateien in einem zentralen Proxy-Server oder einem Web-Gateway, koordiniert durch den "Local Optimizer" innerhalb des Proxy-Servers;
b) Anweisen aller anderen Computergeräte, die über den Proxy-Server im Internet surfen, um redundante Scans gegenüber zuvor gescannten Web-Asset-Dateien zu eliminieren;
c) Koordinieren der Einstellungen über die Proxy-Clients und den Proxy selbst durch den "Central Optimizer"; und
d) Aktivieren des Browsers auf einem Remote-Server mit geringeren Energiekosten und dem Nutzer ermöglichen, den Browser in einem Terminalmodus zu verwenden, in dem Tastenanschläge und Mausbewegungen an den Server gesendet und Grafik- und Audioausgaben an den Nutzer zurückgesendet werden.

13. Ein System zur Optimierung des Energieverbrauchs von Cybersicherheitsprodukten in einem Netzwerk, umfassend:
a) eine Vielzahl von computergestützten Geräten mit einem lokalen Optimierer ("Local Optimizer"), der ein Software-Agent auf jedem Computergerät ist; und
b) einen zentralen Optimierer ("Central Optimizer"), der ein einziger zentralisierter Software-Agent ist, der auf einem Computergerät installiert ist, auf das alle "Local Optimizer"-Software-Agenten zugreifen können, wobei der "Central Optimizer" eine koordinierende Entscheidungsfindungseinheit ist, die Einfluss auf die Optimierungsentscheidungen, die von allen "Local Optimizern" getroffen werden, nimmt,
***dadurch gekennzeichnet, dass:***
der "Central Optimizer" den Betrieb lokaler Sicherheitsprodukte optimiert, durch
a) Anpassen oder Neukonfigurieren des Betriebs der lokalen Sicherheitsprodukte;
b) Erzeugen eines Verhaltensprofils des Nutzers oder der Maschine und entsprechendes Anpassen des Betriebs jedes lokalen Sicherheitsprodukts;
c) Einsetzen künstlicher Intelligenz (KI), um die lokalen Sicherheitsprodukte so zu koordinieren, dass deren Energieverbrauch minimiert wird;
d) Sammeln von Daten über überwachte Objekte und den Status der "Local Optimizer"; und
e) Optimieren der Überprüfung der Objekte auf allen Computern mit "Local Optimizern" durch den "Central Optimizer" unter Verwendung regelbasierter Logik oder Kl.

## Revendications

1. Procédé d'optimisation de la consommation d'énergie de produits de cybersécurité dans un réseau, comprenant les étapes consistant à :
a) installer un optimiseur local étant un agent logiciel sur chaque dispositif informatique ;
b) installer un optimiseur central étant un agent logiciel centralisé unique sur un dispositif informatique étant accessible à tous les agents logiciels optimiseurs locaux ; et
c) faire fonctionner ledit optimiseur central comme unité de prise de décision de coordination, pour impacter les décisions d'optimisation prises par tous les optimiseurs locaux,
***caractérisé en* ce *que*** *:*
ledit optimiseur central optimise le fonctionnement des produits de sécurité locaux par les étapes consistant à :
d) adapter ou reconfigurer le fonctionnement des produits de sécurité locaux ;
e) générer un profil de comportement de l'utilisateur ou de la machine et adapter le fonctionnement de chaque produit de sécurité local, en conséquence ;
f) utiliser l'intelligence artificielle, IA, pour orchestrer lesdits produits de sécurité locaux pour réduire leur consommation d'énergie ;
g) collecter des données concernant des objets surveillés et l'état des optimiseurs locaux ; et
h) optimiser, par ledit optimiseur central, en utilisant une logique basée sur une règle ou l'IA, l'inspection des objets à travers tous les ordinateurs ayant des optimiseurs locaux.

2. Procédé selon la revendication 1, dans lequel les objets surveillés sont sélectionnés parmi le groupe :
- des fichiers ;
- des flux de données ;
- des Localisateurs Uniformes de Ressources, URL.

3. Procédé selon la revendication 1, comprenant en outre l'exécution d'un balayage parallèle par les étapes consistant à :
a) relocaliser des tâches de cybersécurité vers des localisations/des moments où le coût de l'énergie est moindre ; et
b) conduire une parallélisation du balayage des logiciels malveillants avec une activité utilisateur.

4. Procédé selon la revendication 1, dans lequel les charges de travail de cybersécurité, constituées de tâches de cybersécurité, sont relocalisées vers des localisations/des moments où le coût de l'énergie est moindre par les étapes consistant à :
a) entrer au niveau de l'optimiseur central, un tableau présentant des informations sur différentes localisations, où des ressources informatiques sont disponibles et leurs coûts énergétiques variables respectifs dans le temps ;
b) évaluer continuellement, par ledit optimiseur central, le contenu dudit tableau et les informations sur de futures charges de travail de cybersécurité à exécuter par l'intermédiaire du réseau d'optimiseurs locaux ; et
c) à instruire continuellement, par ledit optimiseur central et sur la base desdites informations sur des charges de travail de cybersécurité futures, les optimiseurs locaux vers des charges de travail de cybersécurité en décalage distribuées à opérer dans des localisations énergie préférables et/ou des moments différents.

5. Procédé selon la revendication 4, dans lequel un décalage de charge de travail de cybersécurité est exécuté par l'intermédiaire de communications entre l'optimiseur central et les optimiseurs locaux des dispositifs informatiques sources et de destination, où la charge de travail a été relocalisée.

6. Procédé selon la revendication 4, dans lequel une consommation d'énergie excessive que l'antivirus, AV, conduit durant un balayage périodique est évitée par les étapes consistant à :
a) surveiller continuellement, par l'optimiseur local, l'utilisation en % de la CPU du dispositif informatique que conduit ledit optimiseur local ; et
b) à reporter de manière dynamique ledit balayage périodique à des moments où l'utilisation en % de la CPU dans le temps où il est prévu que l'AV soit exécuté, sur la base des données d'antécédents.

7. Procédé selon la revendication 4, comprenant en outre la réduction des opérations d'entrée/sortie de fichiers par les étapes consistant à ;
a) faire persister les fichiers sur un stockage volatile de sorte que les fichiers soient lus une fois à partir d'une mémoire non volatile dans une mémoire volatile ; et
b) à exécuter chaque balayage de fichiers suivant sur ledit stockage volatile.

8. Procédé selon la revendication 4, comprenant en outre les étapes consistant à:
a) permettre à l'optimiseur central de retenir une liste mise à jour de fichiers balayés où la liste est maintenue sous la forme d'un tableau, incluant tous les fichiers balayés au moins une fois dans un réseau d'ordinateurs ;
b) reporter, par l'optimiseur local dudit dispositif, chaque fichier qui a été balayé en un dispositif informatique pour la première fois qui existe, conjointement à des métadonnées ;
c) répliquer ledit tableau à travers tous les dispositifs informatiques faisant tourner l'optimiseur local ; et
d) à décider quels fichiers l'antivirus, AV, devrait ignorer dans ses opérations futures de balayage.

9. Procédé selon la revendication 4, comprenant en outre les étapes consistant à :
a) enregistrer d'autres attributs de métadonnées du fichier à l'intérieur de la base de données ;
b) utiliser des valeurs d'attributs de métadonnées pour comparaison avant le prochain balayage d'un fichier ; et
c) durant un balayage de fichier, à sauter le fichier chaque fois que lesdits attributs de métadonnées n'ont pas été modifiés.

10. Procédé selon la revendication 4, comprenant en outre la compression du fichier par l'optimiseur local avec une protection par mot de passe en utilisant une base de données pour enregistrer le mot de passe.

11. Procédé selon la revendication 4, dans lequel chaque fois qu'un antivirus, AV, présente une mise à jour de ses bases de données de signatures pour identifier un logiciel malveillant inconnu précédemment, exécuter une optimisation par les étapes consistant à :
a) partager les bases de données de signatures d'AV, sur la base du type de fichier et balayer à nouveau uniquement les fichiers à l'intérieur d'une catégorie de type de fichiers qui ont été modifiés dans sa base de données de signatures ;
b) ajouter une date d'initiation à chaque signature qui énonce le moment où le code malveillant a été créé ;
c) balayer uniquement les fichiers créés ou modifiés après ladite date d'initiation ; et
d) à balayer tous les fichiers requis uniquement avec un sous-ensemble de bases de données de signatures qui contiennent l'incrément des signatures qui ont été ajoutées ou modifiées depuis le balayage récent.

12. Procédé selon la revendication 4, dans lequel l'efficience énergétique d'un antivirus, AV, qui prend en charge des fichiers Internet basés sur un navigateur est optimisée par les étapes consistant à :
a) balayer les fichiers de ressources Internet dans un serveur proxy centralisé ou un portail Internet une fois, orchestré par l'optimiseur local à l'intérieur du serveur proxy ;
b) instruire chaque autre dispositif informatique qui navigue à travers Internet *via* le serveur proxy pour éliminer les balayages redondants vers les fichiers de ressources Internet qui ont été précédemment balayés ;
c) orchestrer, par l'optimiseur central, les paramétrages à travers les clients proxy et le proxy lui-même ; et
d) à activer le navigateur dans un serveur distant avec un coût de l'énergie moindre et à permettre à l'utilisateur d'utiliser le navigateur dans un mode terminal dans lequel les pressions sur une touche et les mouvements de souris sont envoyés au serveur et une sortie graphique et audio sont rétro-envoyées à l'utilisateur.

13. Système d'optimisation de la consommation d'énergie de produits de cybersécurité dans un réseau, comprenant :
a) une pluralité de dispositifs informatiques ayant un optimiseur local étant un agent logiciel sur chaque dispositif informatique ; et
b) un optimiseur central étant un agent logiciel centralisé unique installé sur un dispositif informatique étant accessible à tous les agents logiciels optimiseurs locaux, ledit optimiseur central étant une unité de prise de décision de coordination, pour impacter les décisions d'optimisation prises par tous les optimiseurs locaux,
***caractérisé en* ce *que*** :
ledit optimiseur central optimise le fonctionnement des produits de sécurité locaux par les étapes consistant à :
a) adapter ou à reconfigurer le fonctionnement des produits de sécurité locaux ;
b) générer un profil de comportement de l'utilisateur ou de la machine et à adapter le fonctionnement de chaque produit de sécurité local, en conséquence ;
c) utiliser l'intelligence artificielle, IA, pour orchestrer lesdits produits de sécurité locaux pour réduire leur consommation d'énergie ;
d) collecter des données concernant des objets surveillés et l'état des optimiseurs locaux ; et
e) à optimiser, par ledit optimiseur central, en utilisant une logique basée sur une règle ou l'IA, l'inspection des objets à travers tous les ordinateurs ayant des optimiseurs locaux.
